# EUROPÄISCHE PATENTSCHRIFT

(11) **EP 1 108 455 B1**
(45) Veröffentlichungstag und Bekanntmachung des Hinweises auf die Patenterteilung: **05.01.2005**
(21) Anmeldenummer: 00810985.2
(22) Anmeldetag: 25.10.2000
(51) Int. Cl.: B01D 21/02, E03B 1/02

(54) **Vorrichtung zum Trennen von Regenwasser zur Gewinnung von vorgereinigtem Nutzwasser**
Device for the separation of rain water for obtaining pre-cleaned water for domestic use
Dispositif pour la séparation d'eau de pluie pour l'obtention d'eau de récupération prénettoyée

(30) Priorität: 30.11.1999 CH 218499
(43) Veröffentlichungstag der Anmeldung: 20.06.2001
(73) Patentinhaber: Oekag Wassertechnik (Schweiz) AG, 6005 Luzern (CH)
(72) Erfinder: Morandini, Giorgio, 6005 Luzern (CH)
(74) Vertreter: Gachnang, Hans Rudolf

(56) Entgegenhaltungen:
- WO-A-97/06872
- CH-A- 678 422
- CH-A- 682 503

## Beschreibung

Gegenstand der Erfindung ist eine Vorrichtung zum Trennen von Regenwasser zur Gewinnung von vorgereinigtem Nutzwasser gemäss Oberbegriff des Patentanspruchs 1.

Der Gesetzgeber hat in den vergangenen Jahren Vorschriften erlassen, die bestimmen, das unverschmutzte Regenabwasser der Natur zurückzuführen. Damit sollen die Abwasserreinigungsanlagen von Fremdwasser entlastet und die sinkenden Grundwasserstände angereichert werden. Auch die stetig erhöhten Abwasserentsorgungs-Gebühren, welche von den Kommunen den Hauseigentümern belastet werden und weiter steigen, zwingen letztere dazu, wenn immer möglich das Regenwasser versickern zu lassen. Das Regenwasser, welches auf Dächern, Strassen und Plätzen gesammelt wird, ist durch verschiedenartige Verunreinigungen verschmutzt. Die in der Regel heute vorgeschriebenen oberflächlichen, mit einer Humus-Filterschicht versehenen Infiltrationsanlagen sind nicht in der Lage, alle Schadstoffe genügend zu filtrieren. Insbesondere die biologisch schlecht oder nicht abbaubaren toxischen Schadstoffe, vor allem die Schwermetalle, verunreinigen und sättigen die als Filtersubstrat dienenden Schichten des Bodens schnell. Sobald diese Filtermaterialien gesättigt sind oder überhaupt mit Schwermetallen und dergleichen angereichert sind, müssen sie als Sondermüll behandelt und entsorgt und kostenintensiv aufbereitet oder deponiert werden. Durch feine Schwebestoffe können die Filter verstopft und damit unwirksam werden. Es besteht sonst die Gefahr, dass die Verunreinigungen ins Grundwasser durchsickern. Bestehen Platzprobleme, können keine grossflächigen Versickerungsanlagen erstellt werden. In solchen Fällen werden unterirdische Versickerungsanlagen erstellt, bei denen die Filterschicht fehlt. Dabei entstehen erhebliche Grundwasser-Verschmutzungsrisiken. Da stets die gesamte Regenwassermenge durch solche Filter und Sickeranlagen geleitet wird, werden riesige Mengen von Filtermaterial (Humus, Filtersande etc.) verunreinigt und müssen gereinigt werden.

Es sind bereits Vorrichtungen bekannt, mit denen das von Dächern und Plätzen anfallende verschmutzte Regenwasser in zwei Fraktionen aufgeteilt werden kann, nämlich in stark verschmutztes und belastetes Wasser, welches zu Beginn eines Regenereignisses oder bei Schwachregen anfällt und die während einer Trockenperiode sich auf den Dächern, Strassen und Plätzen niedergeschlagenen Verunreinigungen in konzentrierter Form enthält, und in Nutzwasser, welches diese zuvor weggespülten Verunreinigungen nicht mehr enthält. Zu diesem Zweck wird gemäss Schweizer Patent Nr. 678 422 das gesammelte verschmutzte Regenwasser in einen Behälter eingeleitet und zwischengespeichert. Während der Verweilzeit im Behälter können sich Schwebestoffe absetzen und in einem Schlammraum sammeln. Das von Schwebestoffen befreite, jedoch immer noch mit gelösten Verunreinigungen belastete Wasser wird durch einen Kleinmengenablauf mit einem Ablaufquerschnitt von beispielsweise 9 bis 50 mm² einer Kläranlage zugeführt. Bei Nieselregen, sehr kurzzeitigem Regenfall oder durch Tauwasser mit Tausalzen verunreinigt kann die gesamte anfallende Wassermenge vorübergehend im Behälter gespeichert, und bis zum nächsten Regenereignis werden die Feststoffe sedimentiert und die noch belastete Restwassermenge der Abwasserreinigungsanlage zugeführt werden. Hält allerdings das Regenereignis länger an und die dem Behälter zugeführte Schmutzwassermenge kann durch den Kleinmengenablauf nicht abgeführt werden, so steigt der Wasserstand im Behälter und das zuviel zugeführte Wasser, welches als Nachlauf wenig verunreinigt ist, wird über eine Ablaufleitung in den Vorfluter oder zum Versickern weggeführt.

Mit dieser Anlage lässt sich wohl das stark verschmutzte zu Beginn eines Regenereignisses oder bei Nieselregen anfallende Regenwasser von Feststoffen befreien; die gelösten Verunreinigungen, insbesondere die Schwermetalle, gelangen aber in die Kläranlage, dann dort in den Klärschlamm und mit diesem, wenn der Klärschlamm als Dünger verwendet wird, in landwirtschaftlich genutzte Böden. Dort führen sie langfristig zu einer Anreicherung der Schwermetalle und dadurch zu grossflächiger unkontrollierbarer Vergiftung der Böden.

Der Erfindung liegt die Aufgabe zugrunde, eine Vorrichtung zu schaffen, mit der die im Regenwasser enthaltenen, nicht abbaubaren Verunreinigungen aufgefangen werden und nicht in die Abwasserreinigungsanlage, in die Bodenversickerung oder den Vorfluter gelangen können.

Gelöst wird diese Aufgabe durch eine Vorrichtung mit den Merkmalen des Patentanspruchs 1. Vorteilhafte Ausgestaltungen der Erfindung sind in den abhängigen Ansprüchen definiert.

Die erfindungsgemässe Vorrichtung ermöglicht es, verunreinigtes Regenwasser von Dächern, Strassen und Plätzen mit einem austauschbaren Filter zu reinigen, obwohl dessen maximal mögliche Durchflussmenge nur einem Bruchteil der auf den dem Filter zugeordneten Dächern, Strassen und Plätzen anfallenden Regenwassermenge entspricht. Die Filtration kann mit geeigneten Filtermaterialien erfolgen, deren Kosten für eine grossflächige Filteranlage nicht tragbar wären. Wegen der geringen Mengen von später wieder aufzubereitenden Filtermaterialien sind die Kosten für den Transport, die Aufbereitung oder für den Ersatz gering. Das Filtermaterial kann in leicht austauschbaren Patronen für Kleinstanlagen, z.B. Ein- und Mehrfamilienhäuser oder grösseren Gefässen für entsprechend grössere Gebäude, wie Fabriken, Schulanlagen etc., eingesetzt werden.

Mit der erfindungsgemässen Vorrichtung kann eine exakte Bestimmung des Verunreinigungsgrades des zufliessenden Wassers erfolgen. Dies ermöglicht eine Qualitätskontrolle des abfliessenden, gefilterten Wassers durch Analysieren des Filterinhalts des auswechselbaren Filters, und es können zudem anhand des Verschmutzungsgrades die Zeitintervalle für einen Filterwechsel vorbestimmt werden. Die Gefahr des Schmutzdurchschlagens durch den Filter wird vermieden und damit die Systemsicherheit erhöht. Die Analyse des Filterinhalts lässt Rückschlüsse ziehen auf die Zusammensetzung der Verunreinigungen, und es können - falls notwendig - Verursacher von spezifischen Verschmutzungen damit ausfindig gemacht werden.

In einer vorteilhaften weiteren Ausführungsform kann die Vorrichtung auch für grössere Wassermengen eingesetzt und es können gleichzeitig die Sand- und Schwebeteile ausgeschieden werden.

Anhand illustrierter Ausführungsbeispiele wird die Erfindung näher erläutert. Es zeigen
- Figur 1: einen Vertikalschnitt durch eine erste Ausführungsform der Vorrichtung mit innenliegendem Filter,
- Figur 2: einen Vertikalschnitt durch eine zweite Ausgestaltung der Vorrichtung,
- Figur 3: eine weitere Ausgestaltung des Kleinmengen-Filtrierbereichs in der zweiten Ausgestaltung der Erfindung und
- Figur 4: einen Grundriss der zweiten Ausgestaltung der Erfindung mit einer Sauberwasser-Versickerung,
- Figur 5: einen Vertikalschnitt durch eine dritte Ausführungsform der Vorrichtung mit einem Sandund Schwebeteileabscheider für die gesamte zufliessende Wassermenge mit innenliegendem Filter und mit einem Sturzwasserzufluss oberhalb des Nutzwasserauslaufs,
- Figur 6: einen Vertikalschnitt durch die dritte Ausführungsform der Vorrichtung mit einem Sandund Schwebeteileabscheider für die gesamte zufliessende Wassermenge mit innenliegendem Filter und mit einem Sturzwasserzufluss auf der Höhe des Nutzwasserauslaufs,
- Figur 7: eine Aufsicht auf die Vorrichtung gemäss Figur 5,
- Figur 8: einen Vertikalschnitt durch den Behälter längs Linie XI - XI in Figur 7.

Die in den Figuren rein schematisch dargestellten Vorrichtungen 1 umfassen nur die für die Erfindung wesentlichen Elemente, nämlich einen Behälter 3, der aus Beton, Kunststoff oder Metall bestehen kann und unten durch einen Boden 5 verschlossen ist. Der Behälter 3 bildet einen Trennraum 7, in welchem das zugeführte verunreinigte Regenwasser in Brauchwasser, abgesetzte Schwebestoffe und stark belastetes Wasser aufgeteilt wird. Der Behälter 3 kann einen runden oder beliebigen anderen Querschnitt aufweisen und ist oben vorzugsweise mit einem abnehmbaren Deckel verschlossen, der die Inspektion des Trennraums 7 und dessen Reinigung ermöglicht. In den Behälter 3 bzw. in den Trennraum 7 mündet eine Zulaufleitung 9. Mit einem an den Trennraum 7 angeschlossenen Nutzwasserauslauf 11 wird vorgereinigtes Regenwasser abgeführt. In Bodennähe verlässt ein Kleinmengen-Ablauf 13 den Behälter 3 und verbindet diesen mit der Kanalisation, die zu einer Abwasser- oder Versickerungsanlage führt. Auf dem oberen Ende des Kleinmengen-Ablaufs 13 sitzt ein Standrohr 15 oder ist Teil des Kleinmengen-Ablaufs 13 und weist auf der Höhe h₀ ein mengenbegrenzender Ablauf in Gestalt einer Kleinmengen-Ablauföffnung 17 auf, deren Durchmesser wenige Millimeter beträgt. Zum Schütze gegen die Verstopfung der Kleinmengen-Ablauföffnung 17 kann eine grossflächige Filtermembran montiert werden (nicht dargestellt). Im Standrohr 15 ist unterhalb der Kleinmengen-Ablauföffnung 17 ein Filter, z.B. eine Filterpatrone 19, eingesetzt, durch welchen das in die Kleinmengen-Ablauföffnung 17 eintretende stark verschmutzte Regenwasser hindurch zum Kleinmengen-Ablauf 13 geleitet wird. Der Filter bzw. die Filterpatrone 19 ist austauschbar. Sie kann mit einer lösbaren Verbindung 18 vom Kleinmengen-Ablauf 13 zum Austausch abgenommen werden. Als Filtermaterial kann ein einziger Filterstoff verwendet werden oder es können mehrere unterschiedliche Filterstoffe übereinander geschichtet sein, mit welchen gezielt zu erwartende Verunreinigungen im Schmutzwasser zurückgehalten werden können. Als Filtermaterialien können feinporige Stoffe mit hohem Filter- oder Adsorbtionsvermögen eingesetzt werden, da die Durchflussmenge äusserst gering ist. Die Filtermaterialien bestimmen die Durchflussmenge und kalibrieren so auch die Ablaufmenge.

Der Schlamm 20 aus dem Schlammraum 21 über dem Boden 5 des Behälters 3 kann von oben mit einer Lanze (keine Abb.) oder durch eine eigens dafür vorgesehene Schlammabsaugleitung 23 periodisch abgeführt werden.

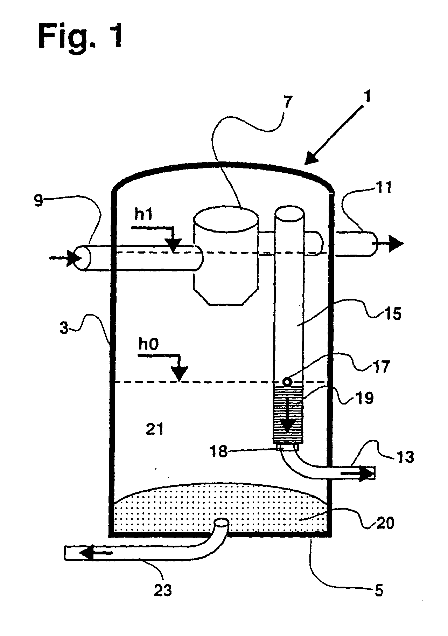

Im folgenden wird eine kurze Funktionsbeschreibung des ersten Ausführungsbeispiels gemäss Figur 1 gegeben.

Die durch das Zulaufrohr 9 bei Nieselregen oder zu Beginn eines Regenereignisses sehr geringe, jedoch hoch belastete Wassermenge gelangt in den Behälter 3. Dort sedimentieren Schwebestoffe und allenfalls andere mitgeführte ungelöste oder grobe Verunreinigungen und sammeln sich am Boden 5 im Schlammraum 21. Durch den Kleinmengen-Ablauf 13 wird kontinuierlich eine durch den Querschnitt des Ablaufs 17 bestimmte Menge verunreinigten, jedoch von Schwebestoffen befreiten Schmutzwassers in den Filter 19 geführt, dessen Querschnitt entsprechend der kleinen zugeführten Flüssigkeitsmenge ebenfalls klein ist. Am unteren Ende des Filters 19 gelangt das nun von den nicht abbaubaren Verschmutzungen, wie Schwermetalle, gereinigte Wasser in die Kanalisation 13 und von dort zu einer Abwasserreinigungsanlage oder Versickerungsstelle. Eine Belastung mit Schwermetallen wird dadurch verhindert, und die ausgefilterten Verunreinigungen und Schwermetalle können periodisch durch Auswechseln der Filterpatrone 19 einer geeigneten Entsorgung oder Wiederaufbereitung zugeführt werden. Gleichzeitig oder - falls notwendig - kann auch der Schlammraum durch Absaugen entleert werden. Ein weitergehender Unterhalt der Vorrichtung ist nicht notwendig.

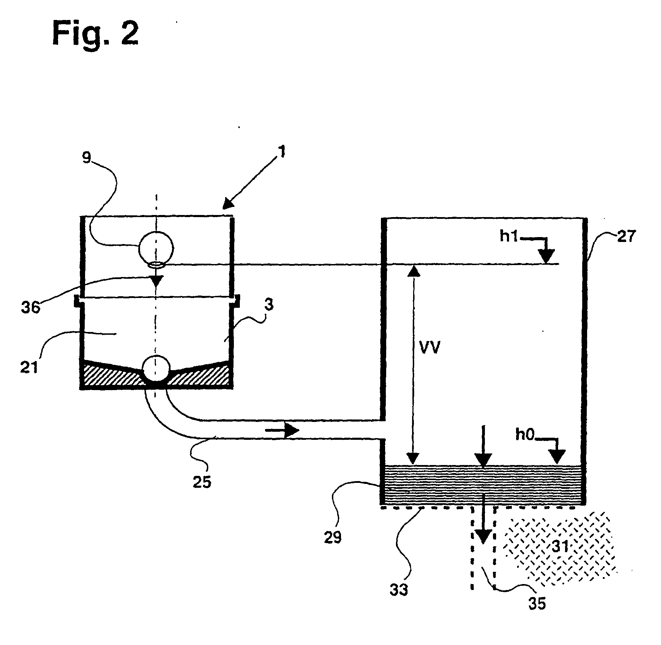

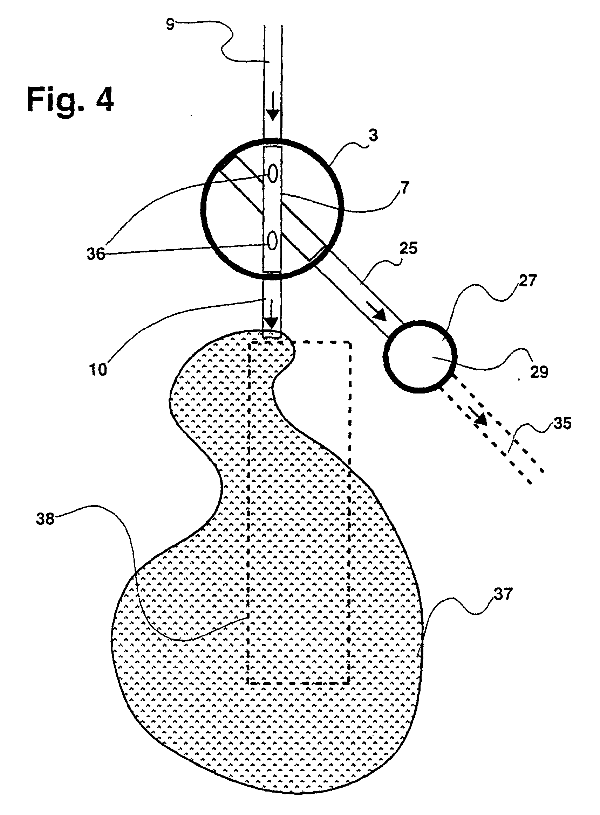

In der zweiten Ausgestaltung der Erfindung gemäss Figuren 2 und 4 umfasst die Vorrichtung 1 wiederum einen Behälter 3 mit einer Zulaufleitung 9 und einen Nutzwasserauslauf 10. Der Behälter 3 ist vorzugsweise zweiteilig ausgeführt, wobei im oberen Teil der Regenwasserzulauf 9 und der Nutzwasserauslauf 10 und im unteren Teil der Schlammraum 21 und eine Verbindungsleitung 25 angeordnet sind. Eine Verbindungsleitung 25 führt, wie in Figuren 2 und 4 schematisch dargestellt, zu einem Schmutzwasser-Filterschacht 27, welcher eine Filtersohle 29 enthält. Die Oberfläche der Filtersohle 29 liegt unterhalb der Mündung der Leitung 25 und auch unterhalb des Zulaufniveaus der Zulaufleitung 9. Die Filtersohle 29 kann direkt über dem gewachsenen Boden 31 angeordnet sein oder auf einem unteren Deckel 33 liegen (in gebrochenen Linien dargestellt) und mit einer Anschlussleitung 35 mit der Kanalisation verbunden sein.

Die Zulaufleitung 9 in der zweiten Ausgestaltung der Erfindung durchquert den Behälter 3 diagonal und führt zu einer Nutzwasserversickerung, z.B. einem Weiher 37 (siehe Figur 4), oder zu einem Verbraucher, z.B. einem Tänk einer Bewässerungsanlage oder einer unterirdischen Versickerungsanlage 38 (schematisch gestrichelt dargestellt). Im Zulauf 9 sind an dessen Unterseite im Rohrabschnitt innerhalb des Behälters 3 eine oder mehrere Öffnungen 36 vorgesehen, durch welche bei geringem Zufluss (Nieselregen oder zu Beginn des Regenereignisses) die gesamte Zuflussmenge der Leitung 9 in den Behälter 3 gelangen und anschliessend im Schacht 27 filtriert und dann zur Abwasseranlage oder Versickerung geführt werden kann. Bei grosser Wassermenge, die nicht mehr vollständig durch das Schluckvermögen der Filterpackung 29, welche als Kalibriervorrichtung dient, abgeführt werden kann, steigt der Wasserstand im Behälter 3 und dem Schacht 27, und das dann zufliessende Regenwasser gelangt direkt über die Leitung 10 in die Nutzwasserversickerung 37. Der Verschmutzungsgrad dieser nur bei grossen Regenereignissen anfallenden Regenwassermenge ist äusserst gering, da zu Beginn des Regenereignisses die hauptsächlichen Verunreinigungen bereits abgeführt und im Schacht 27 durch die Filtersohle 29 ausgefiltert worden sind.

Die Höhendifferenz zwischen h₀ zu h₁ entspricht dem erwarteten Vorlaufvolumen VV.

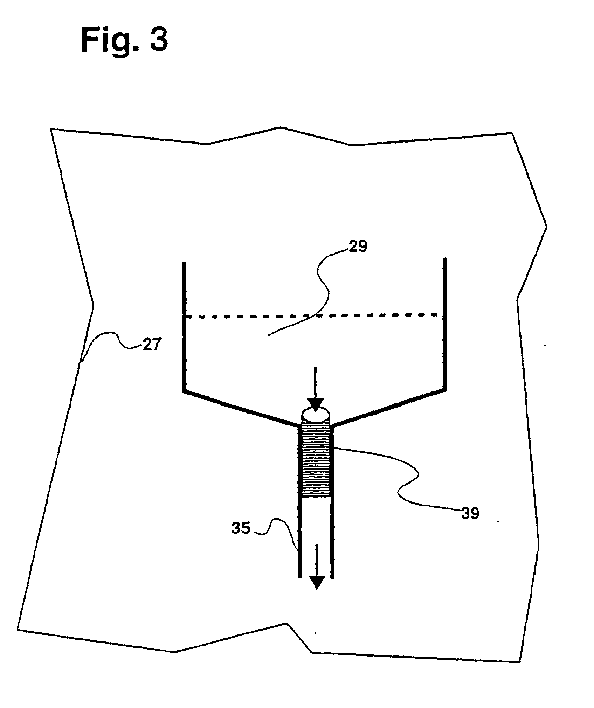

Alternativ zu einer Filtersohle 29 im Schacht 27, wie sie in Figur 2 dargestellt ist, kann in der Ablaufleitung 35 im Schacht 27 ein Patronenfilter 39 eingesetzt sein, oder es können beide Arten kombiniert werden (in Figur 3 gestrichelt dargestellt).

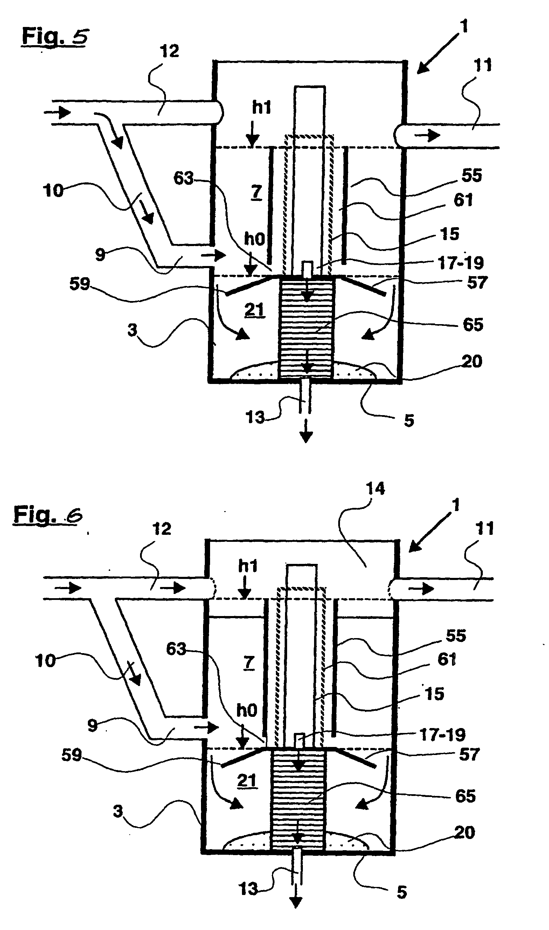

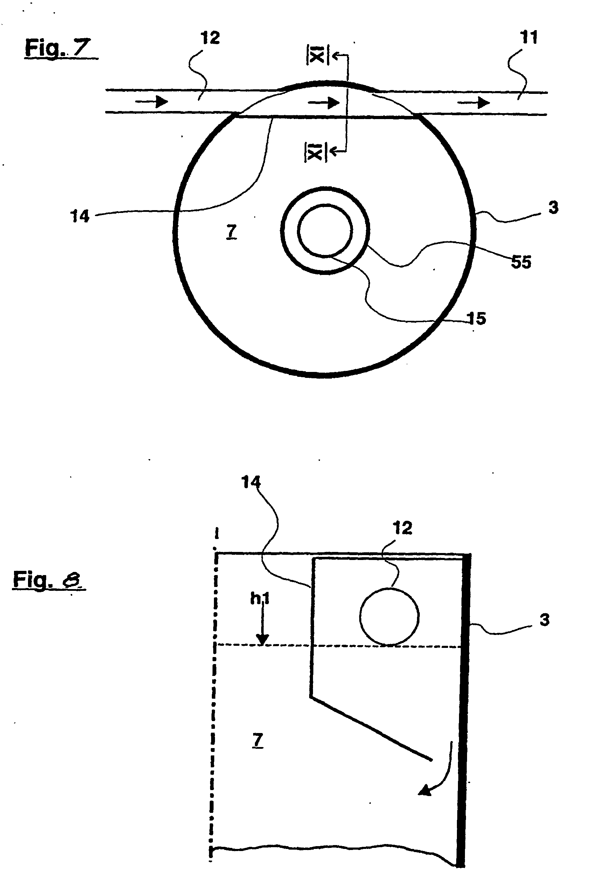

In der dritten Ausgestaltung der Erfindung liegt das Standrohr 15 innerhalb einer zylindrischen Wand 55, durch welche der Trennraum 7 einen kreiszylindrischen Querschnitt erhält. Die Zulaufleitung 9 wird unterhalb des Nutzwasserauslaufs 11 und zudem vorzugsweise tangential in den Behälter 3 eingeführt. Diese Anordnung bewirkt, dass das zufliessende, mit Sand und Schwebestoffen belastete Wasser schraubenlinienförmig im Ringraum aufsteigt und dabei die festen Verunreinigungen sendimentieren können. Um zu verhindern, dass auch der Behälterinhalt im Schlammraum 21 rotiert - und dadurch die Sedimente 20 aufgewirbelt werden können - ist unterhalb der Zulaufleitung 9 eine kegelstumpfförmige Leitschikane 57 eingesetzt, deren periphere Kante 59 in einem Abstand zur Innenwand des Behälters 3 liegt. Das Standrohr 15 ist perforiert und von einem feinmaschigen Netz oder Gitter 61 umgeben. Zum Ableiten von am Netz 61 zurückgehaltenen Feststoffen sind am unteren Rand der Wand 55 Öffnungen 63 ausgebildet.
Im Ausführungsbeispiel gemäss den Figuren 5/6 erfolgt die Filtration in einem im Behälter 3 eingesetzten Filterkorb 65.
Zur Bewältigung grosser Wassermengen und Verhinderung eines Rückstaus kann der Zulaufleitung 9 eine Sturzleitung 10 (steil abfallendes Rohrstück) vorgeschaltet sein und der Zulauf durch ein über dem Niveau h₁ liegendes Rohr 12 erfolgen. Vom Rohr 12 zweigt das Sturzrohr 10 ab und das Ende des Rohres 12 mündet direkt in den Behälter 3. Diese Anordnung erlaubt einen "Kurzschluss" des Schmutzwasser-Zulaufs mit dem Nutzwasserauslauf 11, ohne dass die Ausscheidung von Festkörpern ganz unterbleibt. Die gleiche Anordnung ist in Figur 8 mit innenliegendem Filter 65 möglich.
In den Beispielen gemäss den Figur 6 mündet das Rohr 12 fluchtend mit dem Nutzwasserauslauf 11 auf dem Niveau h₁. Eine entlang der Wand des Behälters 3 verlaufende Tauchwand 41 (vergl. Figuren 7 und 8) kanalisiert des mächtigen Zulauf zum Auslauf 11, wobei Festkörper 20 zwischen der Wand des Behälters 3 und der Unterkante der Tauchwand 41 sedimentieren können. Die Sedimentation wird unterstützt durch den bogenförmigen Verlauf des Wasserflusses hinter der Tauchwand 41. Nachfolgend wird die Funktionsweise der dritten und vierten Ausführungsform erläutert.
Durch die Zulaufleitung 9 fliesst mit Sand und Schwebestoffen sowie beispielsweise durch Schwermetalle belastetes Wasser tangential in den Ringraum ausserhalb der zylindrischen Wand 55. Die Feststoffe sinken in den Schlammraum 21 und das von Festkörpern gereinigte Wasser verlässt den Behälter 3 durch den Nutzwasserauslauf 11.
Bei geringer Zulaufmenge gelangt das von Festkörpern befreite Wasser entweder durch die Öffnungen 63 oder über die Oberkante des Standrohres 15 ins Innere der Wand 55 und von dort durch die Kleinmengen-Ablauföffnung 17 direkt in den Filter 65 oder über den Kleinmengenablauf 13 zu einem Filter ausserhalb des Behälters 3. Bei grossen und/oder länger anhaltenden Regenereignissen, bei denen die Schmutzbelastung des zufliessenden Wassers ohnehin geringer ist, erfolgt ein Kurzschluss mit dem Nutzwasserauslauf 11.

## Patentansprüche

1. Vorrichtung zum Trennen von Regenwasser von Verunreinigungen zur Gewinnung von vorgereinigtem Nutzwasser in einem Behälter (3) und mit einem Trennraum (7,27), welcher einen Zulauf (9) für ungereinigtes Regenwasser aufweist, mit einem Kleinmengen-Ablauf (13,25) für Schmutzwasser und mit einem Nutzwasserauslauf (11), der über dem Kleinmengen-Ablauf (13,25) liegt, wobei zum Ausscheiden des zu Beginn des Regenereignisses anfänglich in kleiner Menge zufliessenden und stark verschmutzten Regenwassers im Behälter (3) eine Kleinmengen-Ablauföffnung (17) vorgesehen ist, **dadurch gekennzeichnet, dass** das durch die Kleinmengen-Ablauföffnung (17) in kleiner Menge zufliessende, stark verschmutzte Wasser einem Filter (19,29,39) zugeleitet wird, dessen Auslaufseite mit dem Kleinmengen-Ablauf (13,25) für Schmutzwasser verbunden ist.

2. Vorrichtung nach Anspruch 1, **dadurch gekennzeichnet, dass** der Kleinmengen-Ablauf (17) mit einer kalibrierten Öffnung versehen ist.

3. Vorrichtung nach Anspruch 2, **dadurch gekennzeichnet, dass** der Filter (19) in einem im Trennraum (7) angeordneten Standrohr (15), in das zulaufseitig der Kleinmengen-Ablauf (17) mündet, eingesetzt ist.

4. Vorrichtung nach Anspruch 1, **dadurch gekennzeichnet, dass** zur Mengenbegrenzung des abfliessenden Wassers eine kalibrierte Filterpackung (29,39) eingesetzt ist.

5. Vorrichtung nach Anspruch 4, **dadurch gekennzeichnet, dass** die Filterpackung (29,39) in einem neben dem Trennraum (3,27) liegenden und durch eine Leitung (25;18) mit letzterem verbundenen Schacht (27) oder dass der Filter (39) in einer Leitung (35) am unteren Ende des Schachts (27) eingesetzt ist.

6. Vorrichtung nach einem der Ansprüche 4 oder 5, **dadurch gekennzeichnet, dass** die Filterpackung (29) die Sohle eines unten offenen Schachts (27) bildet, so dass das gereinigte Wasser direkt in den Boden (31) versickerbar ist oder dass der Filter (29) auf einem den Schacht (27) unten verschliessenden Deckel (33) liegt und das gereinigte Wasser durch eine Leitung (35) abführbar ist.

7. Vorrichtung nach Anspruch 1, **dadurch gekennzeichnet, dass** der Filter (19,29,39) ein oder mehrere Filtermaterialien enthält, mit welchen unterschiedliche Schadstoffe ausfilterbar sind.

8. Vorrichtung nach einem der Ansprüche 1 bis 7, **dadurch gekennzeichnet, dass** der Kleinmengen-Ablauf (17) innerhalb einer umlaufenden Wand (55) angeordnet ist, welche den Behälter (3) in einen Ringraum zum Ausscheiden von Feststoffen und einen vom Ringraum getrennten zentralen Bereich über dem Kleinmengen-Ablauf (17) aufteilt.

9. Vorrichtung nach Anspruch 8, **dadurch gekennzeichnet, dass** im Bereich der Unterkante der umlaufenden Wand (55) Öffnungen zum Ableiten von innerhalb der Wand (55) sedimentierten Feststoffen sowie eine kegelstumpfförmiges Schikane (57) zur Verhinderung einer kreisenden Wasserströmung im Schlammraum (21) angeordnet sind.

10. Vorrichtung nach einem der Ansprüche 8 oder 9, **dadurch gekennzeichnet, dass** die Zulaufleitung (9) unterhalb des Nutzwasserauslaufs (11) tangential in den Behälter (3) mündet.

11. Vorrichtung nach einem der Ansprüche 1 bis 10, **dadurch gekennzeichnet, dass** die Zulaufleitung (9) an das Ende einer Sturzleitung (10) anschliesst, welche von einem oberhalb des Nutzwasserauslaufs (11) in den Behälter (3) einmündenden Rohr (12) abzweigt.

12. Vorrichtung nach einem der Ansprüche 8 oder 9, **dadurch gekennzeichnet, dass** die Zulaufleitung (9) an das Ende einer Sturzleitung (10) anschliesst, welche von einem auf gleicher Höhe wie der Nutzwasserauslauf (11) in den Behälter (3) einmündenden Rohr (12) abzweigt und dass das Ende des Rohrs (12) und der Auslauf (11) aus dem Behälter (3) in einen Raum hinter einer beabstandet zur Wand des Behälters (3) verlaufenden Tauchwand (41) liegen.

## Claims

1. Apparatus for separating rain water from impurities for the purposes of obtaining pre-filtered service water, said apparatus comprising a container (3) with a separating chamber (7, 27), which includes an inlet (9) for unfiltered rainwater, a small volume drain (13, 25) for contaminated water and a service water outlet (11), which is situated above the small volume drain (13, 25), wherein a small volume drain opening (17) is provided for separating off the rainwater in the container (3), which rainwater, when it starts to rain, is heavily contaminated and initially flows into the container in a small volume, **characterised in that** the heavily contaminated water flowing in a small volume through the small volume drain opening (17) is conducted to a filter (19, 29, 39), the outlet side of which is connected to the small volume drain (13, 25) for contaminated water.

2. Apparatus according to claim 1, **characterised in that** the small volume drain (17) is provided with a calibrated opening.

3. Apparatus according to claim 2, **characterised in that** the filter (19) is inserted in a vertical pipe (15), which is disposed in the separating chamber (7), the small volume drain (17) terminating into said vertical pipe (15) on the inlet side.

4. Apparatus according to claim 1, **characterised in that** a calibrated filter packing (29, 39) is inserted to restrict the volume of water draining away.

5. Apparatus according to claim 4, **characterised in that** the filter packing (29, 39) is inserted in a shaft (27), which is situated next to the separating chamber (3, 27) and is connected to said separating chamber (3, 27) by means of a line (25; 18), or **in that** the filter (39) is inserted in a line (35) at the bottom end of the shaft (27).

6. Apparatus according to one of claims 4 or 5, **characterised in that** the filter packing (29) forms the floor of a shaft (27), which is open at the bottom, such that the filtered water can sink directly into a porous stratum (31), or **in that** the filter (29) is situated on a cover (33), which closes the shaft (27) at the bottom, and the filtered water can be drained off by means of a line (35).

7. Apparatus according to claim 1, **characterised in that** the filter (19, 29, 39) contains one or several filter materials, by means of which various pollutants can be filtered out.

8. Apparatus according to one of claims 1 to 7, **characterised in that** the small volume drain (17) is disposed internally of a circumferential wall (55), which divides the container (3) into an annular chamber for separating off solid materials and a central region separated from the annular chamber above the small volume drain (17).

9. Apparatus according to claim 8, **characterised in that** in the region of the bottom edge of the circumferential wall (55) there are disposed openings for drawing off solid materials deposited inside on the wall (55) and a truncated cone-shaped baffle plate (57) for preventing the water flow circulating in the contaminated chamber (21).

10. Apparatus according to one of claims 8 or 9, **characterised in that** the inlet line (9) terminates into the contained (3) in a tangential manner below the service water outlet (11).

11. Apparatus according to one of claims 1 to 10, **characterised in that** the inlet line (9) is connected to the end of a plunge line (10), which branches off from a tube (12), which terminates into the container (3) above the service water outlet (11).

12. Apparatus according to one of claims 8, 9 or 11, **characterised in that** the inlet line (9) is connected to the end of a plunge line (10), which branches off from a tube (12), which terminates into the container (3) at the same level as the service water outlet (11), and **in that** the end of the tube (12) and the outlet (11) out of the container (3) are situated in a chamber behind a baffle wall, which extends at a spacing from the wall of the container (3).

## Revendications

1. Dispositif pour la séparation entre de l'eau de pluie et des impuretés, pour obtenir de l'eau industrielle préépurée dans un réservoir (3), et avec une enceinte de séparation (7, 27) présentant une amenée (9) pour de l'eau de pluie non épurée, avec une évacuation pour petites quantités (13, 25) pour l'eau souillée et avec une évacuation d'eau utilisable ou industrielle (11), située au-dessus de l'évacuation en petites quantités (13, 25), sachant que, pour séparer l'eau de pluie qui arrive en petites quantités en début de pluie ou de l'événement pluvieux et qui est fortement souillée, est prévue dans le réservoir (3) une ouverture d'évacuation pour petites quantités (17), **caractérisé en ce que** l'eau fortement souillée, arrivant en petites quantités par l'ouverture d'évacuation pour petites quantités (17), est amenée à un filtre (19, 29, 39) dont le côté évacuation est relié à l'évacuation pour petites quantités (13, 25) pour l'eau souillée.

2. Dispositif selon la revendication 1, **caractérisé en ce que** l'évacuation pour petites quantités (17) est munie d'une ouverture calibrée.

3. Dispositif selon la revendication 2, **caractérisé en ce que** le filtre (19) est inséré dans une colonne ou une conduite montante (15), disposée dans l'enceinte de séparation (7), dans laquelle débouche, côté amenée, l'évacuation pour petites quantités (17).

4. Dispositif selon la revendication 1, **caractérisé en ce qu'**un garnissage filtrant (29, 39) calibré est utilisé pour obtenir la limitation de la quantité d'eau s'évacuant.

5. Dispositif selon la revendication 4, **caractérisé en ce que** le garnissage filtrant (29, 39) est inséré dans un puits (27), placé à côté de l'enceinte de séparation (3, 27) et relié à cette dernière par une conduite (25 ; 18), ou bien **en ce que** le filtre (39) est inséré dans une conduite (35), à l'extrémité inférieure du puits (27).

6. Dispositif selon l'une des revendications 4 ou 5, **caractérisé en ce que** le garnissage filtrant (29) forme la sole d'un puits (27) ouvert en partie inférieure, de manière que l'eau épurée puisse être filtrée par percolation dans le sol (31), ou **en ce que** le filtre (29) est placé sur un couvercle (33), fermant en partie inférieure le puits (27), et l'eau épurée est susceptible d'être évacuée par une conduite (35).

7. Dispositif selon la revendication 1, **caractérisé en ce que** le filtre (19, 29, 39) contient un ou plusieurs matériaux filtrants, à l'aide desquels différentes substances nocives peuvent être éliminées par filtrage.

8. Dispositif selon l'une des revendications 1 à 7, **caractérisé en ce que** l'évacuation pour petites quantités (17) est disposée à l'intérieur d'une paroi (55) de pourtour, subdivisant le réservoir (3) en un espace annulaire pour la séparation des solides, et une zone centrale, séparée de l'espace annulaire, située au-dessus de l'évacuation pour petites quantités (17).

9. Dispositif selon la revendication 8, **caractérisé en ce que**, dans la zone de l'arête inférieure de la paroi (55) de pourtour, sont disposées des ouvertures pour l'évacuation de solides ayant sédimenté à l'intérieur de la paroi (55) ainsi qu'une chicane (57) à forme tronconique, pour empêcher un écoulement d'eau circulatoire ou tournante (centrifuge) dans l'enceinte à boue (21).

10. Dispositif selon l'une des revendications 8 ou 9, **caractérisé en ce que** la conduite d'admission (9) débouche tangentiellement dans le réservoir (3), au-dessous de l'évacuation d'eau industrielle (11).

11. Dispositif selon l'une des revendications 1 à 10, **caractérisé en ce que** la conduite d'évacuation (9) se raccorde à l'extrémité d'une conduite de descente, qui se ramifie depuis un tube (12) s'embouchant au-dessus de l'évacuation d'eau industrielle (11) dans le réservoir (3).

12. Dispositif selon l'une des revendications 8 ou 9, **caractérisé en ce que** la conduite d'amenée (9) se raccorde à l'extrémité d'une conduite de descente (10), se ramifiant depuis un tube (12) s'embouchant au même niveau que celui de l'évacuation d'eau industrielle (11) dans le réservoir (3), et **en ce qu'**une extrémité du tube (12) et l'évacuation (11) depuis le réservoir (3) sont situées dans une enceinte, derrière une paroi plongeante (41) s'étendant à distance de la paroi du réservoir (3).
